# FASCICULE DE BREVET EUROPEEN

(11) **EP 2 960 531 B1**
(45) Date de publication et mention de la délivrance du brevet: **31.10.2018**
(21) Numéro de dépôt: 15171947.3
(22) Date de dépôt: 12.06.2015
(51) Int. Cl.: F16B 19/10, F16B 37/06

(54) **PIÈCE À SERTIR SUR UN SUPPORT, DISPOSITIF COMPRENANT UNE TELLE PIÈCE ET PROCÉDÉS DE FABRICATION D'UNE TELLE PIÈCE ET D'UN TEL DISPOSITIF**
WERKSTÜCK ZUM FESTKLEMMEN AUF EINER HALTERUNG, VORRICHTUNG, DIE EIN SOLCHES WERKSTÜCK UMFASST, UND HERSTELLUNGSVERFAHREN EINES SOLCHEN WERKSTÜCKS UND EINER SOLCHEN VORRICHTUNG
CRIMPING PIECE ON A SUPPORT, DEVICE COMPRISING SUCH A PIECE AND METHODS OF MANUFACTURING SUCH A PART AND SUCH A DEVICE

(30) Priorité: 27.06.2014 FR 1401459
(43) Date de publication de la demande: 30.12.2015
(73) Titulaire: Bollhoff Otalu S.A., 73490 La Ravoire (FR)
(72) Inventeur: Faguer, Sylvain, 73800 ARBIN (FR); Bernard, Yann, 73000 SONNAZ (FR); Berlire, Emmanuelle, 73190 Challes-les-Eaux (FR)
(74) Mandataire: Talbot, Alexandre

(56) Documents cités:
- EP-A1- 0 398 403
- EP-A1- 0 536 957
- EP-A1- 1 447 576
- DE-A1- 3 240 539
- DE-A1-102011 053 035
- GB-A- 2 140 889
- GB-A- 2 157 788
- US-A- 2 324 142
- US-A- 3 055 255
- US-A- 3 948 142

## Description

### Domaine technique de l'invention

L'invention concerne les pièces à sertir sur un support.

### État de la technique

Une pièce à sertir est un élément d'assemblage de pièces, renflée à une extrémité et dont on écrase l'autre extrémité. La pièce peut être un écrou, un rivet, une vis ou un goujon, ou encore une pièce ayant une fonction entretoise ou une fonction rotule. Un écrou est une pièce creuse taraudée, c'est-à-dire qui comporte un filetage interne, destinée à être fixée à une autre pièce filetée. Un rivet est un élément d'assemblage de pièces plates. Une vis ou goujon est une pièce pleine filetée, c'est-à-dire qui comporte un filetage externe. Une entretoise est une pièce de liaison destinée à être placée transversalement entre la pièce à fonction entretoise et une pièce secondaire. Une telle entretoise permet, notamment, de maintenir un écartement constant entre le support, sur lequel est sertie la pièce à fonction entretoise, et la pièce secondaire. Une rotule est une pièce comportant une tête sphérique pour, notamment, offrir une liaison rotule.

On peut citer la demande de brevet français FR2870573 qui divulgue un goujon à sertir dans un support, comportant une zone de chambrage destinée à la formation d'un bourrelet de sertissage. Mais ces goujons génèrent des contraintes radiales sur le support, c'est-à-dire des efforts le long de lignes perpendiculaires à l'axe longitudinal du goujon. On peut citer la demande de brevet européen EP1918596 qui divulgue un écrou à sertir en aveugle comprenant une partie déformable munie de trous pour affaiblir la paroi de la partie déformable. Mais les trous sont destinés à amorcer la déformation de l'écrou dans une zone déterminée de la partie déformable afin de sertir l'écrou avec précision. Un tel écrou ne permet pas de limiter les contraintes radiales exercées sur le support.

On peut citer la demande de brevet français FR2700817 qui divulgue un rivet muni d'une tête et d'un fût comportant une zone de déformation. La zone de déformation comprend une discontinuité de forme subdivisant la zone de déformation en un premier tronçon tronconique adjacent au fût et s'évasant dans la direction opposée au fût et un second tronçon, situé entre la tête et le premier tronçon, ayant une face latérale extérieure cylindrique. En outre, l'épaisseur de la paroi du fût adjacente au premier tronçon diminue progressivement vers le premier tronçon. La zone de déformation se déforme en un bourrelet de sertissage qui vient au contact du support mais engendre des contraintes radiales sur le support. Ce rivet n'est donc pas adapté pour des supports en matériau composite qui peuvent se déformer, se délaminer ou se fissurer, sous l'action de forces radiales. On entend par matériau composite, un matériau comprenant une matrice réalisée à partir d'un matériau thermoplastique, tels que les polyoléfines, les polyamides ou les polypropylènes, ou d'un matériau thermodurcissable, tels que les polyesters insaturés, les polyépoxydes ou les polyuréthanes, et qui comprend des renforts réalisés dans un matériau distinct de la matrice, par exemple des fibres de verre, de carbone, d'aramide, ou autres, pris seuls ou en combinaison. Par ailleurs, la diminution d'épaisseur du fût permet de créer un coude tourné vers l'intérieur du rivet afin que la paroi amincie se déforme et vienne bloquer une tige fileté montée dans le fût pour obtenir une traction nécessaire au sertissage. Cette paroi amincie ne permet pas de diminuer les contraintes radiales exercées sur le support.

### Objet de l'invention

L'objet de l'invention consiste à pallier les inconvénients cités ci-avant, et en particulier à fournir des moyens pour sertir une pièce sur un support qui ne supporte pas ou peu de contraintes radiales, en particulier sur un support en matériau composite.

Selon un aspect de l'invention, il est proposé une pièce à sertir sur un support, comprenant une tête d'appui et un fût comportant un tronçon de sertissage destiné à être déformé lors d'une opération de sertissage de la pièce, le tronçon de sertissage comprenant un premier tronçon creux adjacent à la tête d'appui et un deuxième tronçon adjacent au premier tronçon.

Le deuxième tronçon est configuré pour se déformer à l'extérieur de la pièce en un bourrelet de sertissage pour sertir la pièce sur le support, et le premier tronçon est configuré pour se déformer à l'intérieur du creux du fût en un bourrelet de dégagement pour limiter les efforts sur le support lors de l'opération de sertissage de la pièce.

Ainsi on fournit une pièce dont le tronçon de sertissage limite les contraintes radiales sur le support lors de l'opération de sertissage. Une telle pièce est particulièrement adaptée aux supports en matériau composite. La pièce est également adaptée à des supports réalisés à partir de différents matériaux fragiles qui n'acceptent pas ou peu de contraintes radiales.

Le premier tronçon comporte un coude faisant saillie à l'intérieur du creux du fût et subdivisant le premier tronçon en une première portion tronconique adjacente à la tête d'appui et s'évasant en direction de la tête d'appui, et en une deuxième portion tronconique adjacente au deuxième tronçon et s'évasant dans la direction opposée à la tête d'appui.

Selon un mode de réalisation, le deuxième tronçon a une forme tronconique s'évasant dans la direction opposée à la tête d'appui. Ainsi, on fournit une pièce simple à réaliser.

Selon un autre mode de réalisation, le deuxième tronçon comporte un coude faisant saillie à l'extérieur du fût.

Grâce à cette caractéristique, on améliore encore l'amorce de la déformation du tronçon de sertissage.

Le deuxième tronçon peut être creux et l'épaisseur de la paroi du deuxième tronçon est identique à celle du premier tronçon.

Ainsi, on peut réaliser la pièce à partir d'une ébauche ayant un fût cylindrique en le déformant, par exemple à l'aide de mors, en un point du corps de l'ébauche.

Le fût peut comporter un tronçon distal adjacent au deuxième tronçon, et l'épaisseur de la paroi du tronçon distal est supérieure ou égale à celle du deuxième tronçon.

Un tel fût permet d'améliorer l'amorce de la déformation du tronçon de sertissage pour faciliter le sertissage de la pièce. Le fait d'améliorer la déformation du tronçon de sertissage empêche une déformation intempestive du premier tronçon à l'extérieur de la pièce qui pourrait venir au contact du support et engendrer des contraintes radiales sur le support.

La deuxième portion tronconique et le deuxième tronçon peuvent avoir la même épaisseur et forment un segment de sertissage, la longueur de la génératrice externe du segment de sertissage étant supérieure ou égale à celle de la génératrice externe de la première portion.

L'angle saillant entre les portions du premier tronçon peut être compris entre 90° et 175°.

La pièce peut être réalisée en acier inoxydable ou non, ou en aluminium, ou tout autres matériaux déformables.

La tête d'appui peut en outre comporter une zone d'appui destinée à être en contact avec une surface du support, et une zone de dégagement située à distance de la surface du support.

Selon un autre aspect de l'invention, il est proposé un dispositif comprenant un support muni d'un logement dans lequel est introduite une pièce telle que définie ci-avant.

Selon encore un autre aspect de l'invention, il est proposé un procédé de fabrication d'une pièce à sertir sur un support, la pièce comprenant une tête d'appui et un fût, comportant une étape de formation, au niveau du fût, d'un tronçon de sertissage destiné à être déformé lors d'une opération de sertissage de la pièce.

L'étape de formation du tronçon de sertissage comporte :
- une formation d'un premier tronçon creux adjacent à la tête d'appui et configuré pour se déformer à l'intérieur du creux du fût en un bourrelet de dégagement pour limiter les efforts sur le support lors de l'opération de sertissage de la pièce, et
- une formation d'un deuxième tronçon adjacent au premier tronçon et configuré pour se déformer à l'extérieur de la pièce en un bourrelet de sertissage pour sertir la pièce sur le support.

L'étape de formation du premier tronçon comporte une formation d'un coude faisant saillie à l'intérieur du creux du fût et subdivisant le premier tronçon en une première portion tronconique adjacente à la tête d'appui et s'évasant en direction de la tête d'appui, et en une deuxième portion tronconique adjacente au deuxième tronçon et s'évasant dans la direction opposée à la tête d'appui.

Selon un mode de mise en oeuvre, le deuxième tronçon a une forme tronconique s'évasant dans la direction opposée à la tête d'appui.

Selon un autre mode de mise en oeuvre, l'étape de formation du deuxième tronçon comporte une formation d'un coude faisant saillie à l'extérieur du fût.

La pièce à sertir peut être en métal et le procédé de fabrication de la pièce à sertir peut être dépourvu d'une étape de traitement thermique de la pièce à une température supérieure à 100°C.

Selon encore un autre aspect, il est proposé un procédé de fabrication d'un dispositif muni d'un support ayant un logement, comprenant les étapes suivantes :
- fabriquer une pièce à sertir selon le procédé de fabrication défini ci-avant,
- introduire la pièce dans le logement, et
- sertir la pièce sur le support.

### Description sommaire des dessins

D'autres avantages et caractéristiques ressortiront plus clairement de la description qui va suivre de modes particuliers de réalisation et de mise en oeuvre de l'invention donnés à titre d'exemples non limitatifs et représentés aux dessins annexés, dans lesquels :
- la figure 1, illustre schématiquement une vue en coupe d'un mode de réalisation d'une pièce à sertir selon l'invention montée sur un support, avant sertissage ;
- la figure 2, illustre schématiquement une vue en coupe de la pièce de la figure 1 sertie sur le support,
- la figure 3, illustre schématiquement les principales étapes d'un procédé de fabrication d'un dispositif muni d'un support et d'une pièce sertie sur le support ; et
- la figure 4, illustre schématiquement une vue en coupe d'un autre mode de réalisation d'une pièce à sertir selon l'invention montée sur un support, avant sertissage.

### Description détaillée

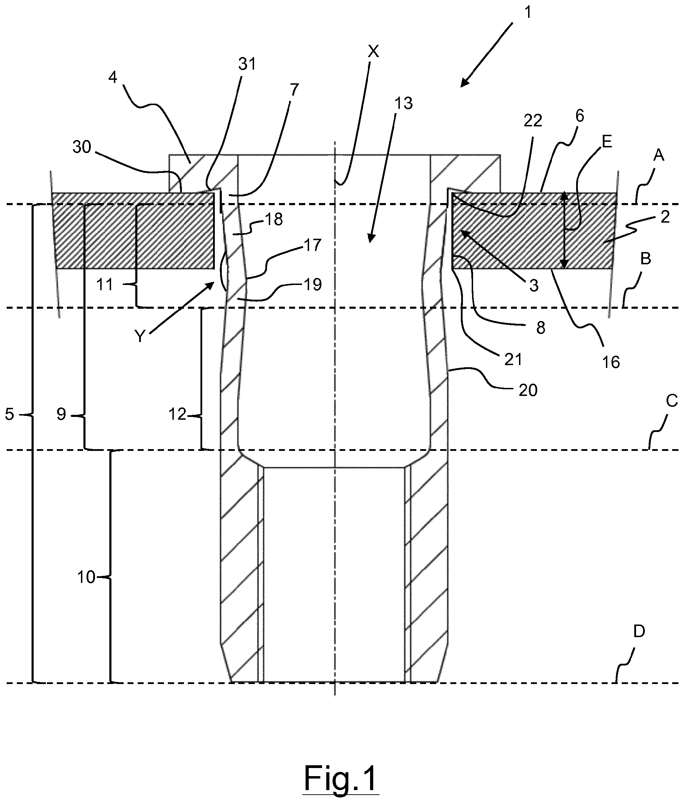

Sur les figures 1, 2 et 4, on a représenté une pièce 1 à sertir sur un support 2. Le support peut être en métal ou en matériau composite. De préférence, le support 2 est en matériau composite pour lequel la pièce 1 est particulièrement adaptée.

Avant sertissage, la pièce 1 est introduite dans un logement 3 du support 2. La pièce 1 comporte une tête d'appui 4 et un fût 5. La tête d'appui 4 est destinée à venir au contact d'une première surface 6 du support lorsque la pièce 1 est insérée dans le logement 3. La tête d'appui 4 peut comprendre en outre un tronçon proximal 7 creux qui s'étend le long d'un axe longitudinal X du fût 5. Le tronçon proximal 7 peut avoir une surface externe cylindrique, par exemple à section hexagonale, carrée, ou circulaire. On entend ici par cylindre, un solide limité par une surface cylindrique engendrée par une droite, notée génératrice, parcourant une courbe plane fermée, notée directrice, et deux plans parallèles coupant les génératrices. En outre, la surface externe du tronçon proximal 7 est destinée à venir à proximité de la surface interne 8 du logement 3, c'est-à-dire sans contact avec le support 2, de manière à ne pas générer de contraintes radiales sur le support.

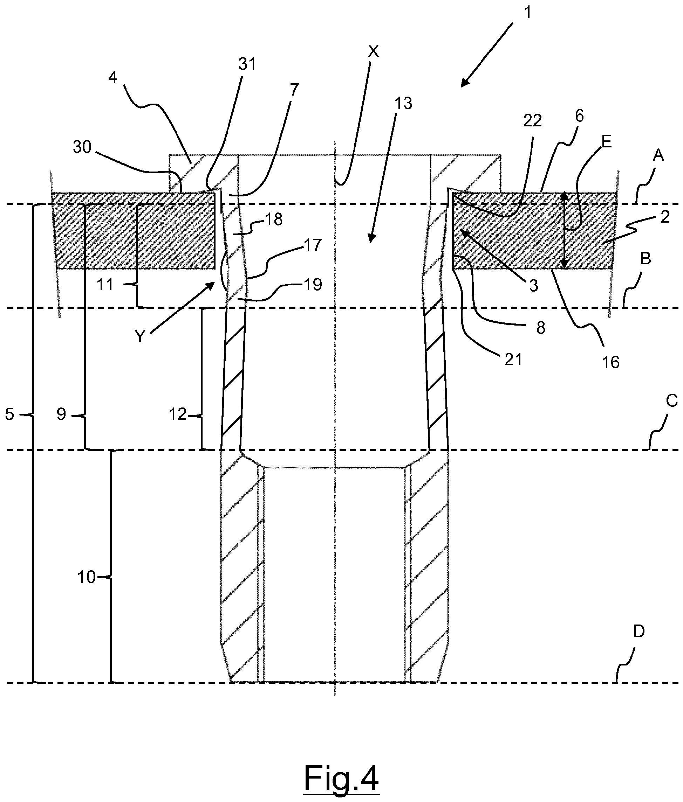

Le fût 5 comprend un tronçon de sertissage 9 et un tronçon distal 10. Le tronçon de sertissage 9 est adjacent à la tête d'appui 4, en particulier adjacent au tronçon proximal 7. Le tronçon distal 10 est adjacent au tronçon de sertissage 9, en d'autres termes, le tronçon de sertissage 9 est situé entre la tête d'appui 4 et le tronçon distal 10. Plus particulièrement, le tronçon distal 10 donne la fonction de la pièce 1. En effet, le tronçon distal 10 peut être creux ou plein. Par exemple le tronçon distal 10 peut comporter un filetage externe pour former une vis ou un goujon. Le tronçon distal 10 peut encore être taraudé, comme illustré sur les figures 1 et 4, et la pièce 1 est alors un écrou. L'extrémité du tronçon distal 10 opposée à la tête d'appui 4 peut être ouverte ou fermée. La pièce 1 peut également être utilisée pour maintenir deux pièces planes entre elles, le support 2 est alors formé par la superposition des deux pièces planes et la pièce 1 est un rivet.

Le tronçon de sertissage 9 est destiné à être déformé lors d'une opération de sertissage de la pièce 1 sur le support 2. L'opération de sertissage consiste à déformer le tronçon de sertissage 9, par traction ou frappe à froid, selon l'axe longitudinal X. Le tronçon de sertissage 9 comprend un premier tronçon 11 et un deuxième tronçon 12. On a représenté une première ligne A en pointillés, correspondant à la limite de séparation entre la tête d'appui 4 et le premier tronçon 11, une deuxième ligne B en pointillés, correspondant à la limite de séparation entre le premier tronçon 11 et le deuxième tronçon 12, et une troisième ligne C en pointillés, correspondant à la limite de séparation entre le deuxième tronçon 12 et le tronçon distal 10. On a également représenté une quatrième ligne D en pointillés, correspondant à la limite d'extrémité du tronçon distal 10. Le premier tronçon 11 comporte un creux 13 et ce tronçon 11 est adjacent à la tête d'appui 4, en particulier au tronçon proximal 7. Le deuxième tronçon 12 est quant à lui adjacent au premier tronçon 11, en d'autres termes le deuxième tronçon 12 est situé entre le premier tronçon 11 et le tronçon distal 10.

De manière générale, pour faciliter la déformation du tronçon de sertissage 9, l'épaisseur de la paroi du tronçon distal 10 est supérieure ou égale à celle du deuxième tronçon 12. En améliorant la déformation du tronçon de sertissage, on empêche une déformation intempestive du premier tronçon à l'extérieur de la pièce 1, et on empêche d'engendrer des contraintes radiales sur la surface interne 8 du logement 3. En effet, lors du sertissage, la déformation du tronçon de sertissage 9 peut venir au contact de la surface interne 8 du logement 3, ce qui peut engendrer des contraintes radiales à cet endroit.

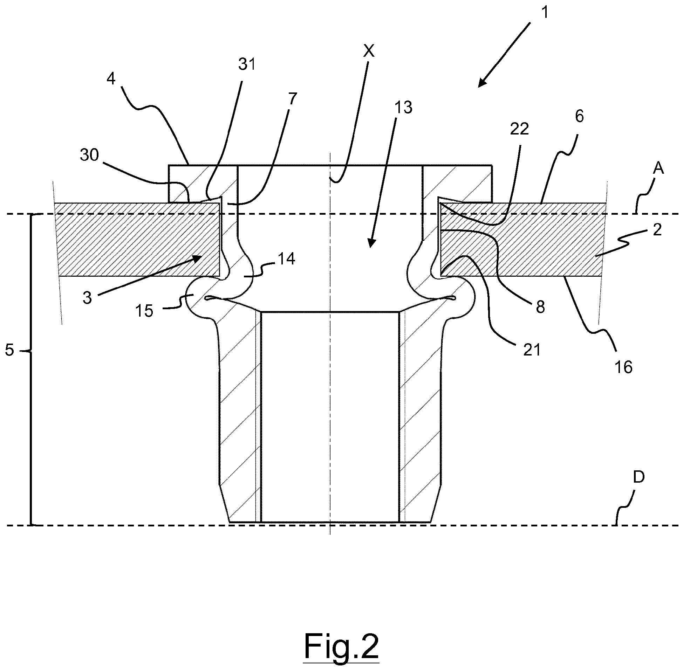

De manière générale, le premier tronçon 11 est configuré pour se déformer, lors de l'opération de sertissage, à l'intérieur du creux 13 du fût 5 en un bourrelet de dégagement 14, comme illustré sur la figure 2. Le bourrelet de dégagement 14 permet de limiter les efforts générés sur le support 2 lors de l'opération de sertissage de la pièce 1. En particulier, le premier tronçon 11 est configuré pour limiter les efforts radiaux sur le support 2. En outre, le bourrelet de dégagement 14 est formé à l'intérieur du creux 13 de sorte que la surface externe du premier tronçon 11 ne soit pas en contact avec la surface interne du logement 3. Ainsi, le premier tronçon 11, lorsqu'il se déforme, n'entraîne pas de contraintes radiales sur le support 2. On entend par contraintes radiales, ou efforts radiaux, des forces exercées selon une direction perpendiculaire à l'axe longitudinal X. Le deuxième tronçon 12 est configuré pour se déformer à l'extérieur de la pièce 1 en un bourrelet de sertissage 15, comme illustré sur la figure 2. Le bourrelet de sertissage 15 vient au contact de la deuxième surface 16 du support 2 pour sertir la pièce 1 au support 2. Le bourrelet de sertissage 15 permet de coincer le support 2 avec la tête d'appui 4 pour fixer la pièce 1 au support 2. Le bourrelet de sertissage 15 engendre uniquement des contraintes axiales, le long de l'axe longitudinal X, sur le support 2.

Le premier tronçon 11 comporte un coude 17 faisant saillie à l'intérieur du creux 13 du fût 5. On entend par coude, une courbure de la paroi du fût 5 de la pièce 1. Le coude 17 forme un angle saillant situé à l'endroit où la paroi du fût change de direction. Ce coude 17 est également noté coude intérieur. Le coude intérieur subdivise le premier tronçon 11 en une première portion 18 et une deuxième portion 19. La première portion 18 a une forme tronconique, elle est adjacente à la tête d'appui 4, en particulier au tronçon proximal 7, et s'évase en direction de la tête d'appui 4. La deuxième portion 19 est également de préférence tronconique, elle est adjacente au deuxième tronçon 12 et s'évase dans la direction opposée à la tête d'appui 4. Le coude intérieur 17 peut avoir des arrêtes saillantes. Le coude 17 peut aussi être arrondi, par exemple lorsqu'il est réalisé en déformant le fût d'une pièce 1 à l'aide de mors à extrémités arrondies.

Le deuxième tronçon 12 a une forme tronconique s'évasant dans la direction opposée à la tête d'appui 4, comme illustré à la figure 4. Dans les modes de réalisation illustrés aux figures 1 et 4, la deuxième portion 19 tronconique et le deuxième tronçon 12 sont contigus et ils ont la même épaisseur. La deuxième portion 19 et le deuxième tronçon 12 forment un segment de sertissage. En particulier, le deuxième tronçon 12 est creux et l'épaisseur de sa paroi est égale à celle du premier tronçon 11. Ainsi on fournit une pièce qui peut être réalisée à partir d'une ébauche ayant un corps creux cylindrique, à section circulaire, carrée, ou hexagonale, et en déformant la paroi du corps creux, par exemple à l'aide de mors, en un point du corps creux pour former le coude intérieur 17. On peut également réaliser la pièce 1 à l'aide d'une machine qui réalise le coude intérieur 17 simultanément à la réalisation de la pièce, en formant une courbure au niveau de la paroi du fût 5. Avantageusement, le deuxième tronçon 12 peut également comprendre un autre coude 20 faisant saillie à l'extérieur du fût 5, comme illustré à la figure 1. Ce coude 20 est noté coude extérieur, il permet d'amorcer la déformation du deuxième tronçon 12 afin de faciliter la formation du bourrelet de sertissage 15, pour améliorer le sertissage de la pièce 1 sur le support 2.

Avantageusement, la position du coude intérieur 17 par rapport à la tête d'appui 4 est fonction de l'épaisseur E du support 2. De préférence, la hauteur de la réunion du tronçon proximal 7 avec la première portion 18, notée par la suite hauteur du coude intérieur 17, est égale à l'épaisseur E du support 2. En d'autres termes, le coude intérieur 17 est situé au niveau de la deuxième surface 16 du support 2. La hauteur du coude intérieur 17 peut être égale à l'épaisseur E du support 2 avec une certaine marge. En particulier, la hauteur du coude intérieur 17 est déterminée de sorte que la déformation du tronçon de sertissage 9 soit telle que le bourrelet de sertissage 15 vienne au contact de la deuxième surface 16 sans appliquer de contraintes radiales sur une première arête 21 située entre la surface interne 8 du logement 3 et la deuxième surface 16. Dans les exemples illustrés aux figures 1 et 4, le coude intérieur 17 est situé en regard de la deuxième surface 16, avant sertissage, et après sertissage, comme illustré sur la figure 2, le bourrelet de sertissage 15 comporte une surface plane en contact avec la deuxième surface 16. De façon générale, le bourrelet de sertissage 15 vient appuyer contre la deuxième surface 16 du support 2 pour garantir le sertissage de la pièce 1. Plus particulièrement, le bourrelet de sertissage 15 est situé à distance de la première arête 21, c'est-à-dire que le bourrelet de sertissage 15 n'est pas en contact avec la première arête 21, pour empêcher de générer des contraintes radiales au niveau de la première arête 21.

Par ailleurs, lorsque le support 2 a une épaisseur E faible, c'est-à-dire inférieure à 2 mm, la pièce 1 ne comporte pas nécessairement de tronçon proximal 7. Selon un autre exemple, lorsque le support 2 a une épaisseur E forte, la pièce 1 peut comporter un tronçon proximal 7 ayant une hauteur non nulle.

Par exemple, la longueur de la génératrice externe du segment de sertissage est supérieure ou égale à celle de la génératrice externe de la première portion 18. Ainsi on favorise la formation d'un bourrelet de sertissage 15.

Selon un autre avantage, l'angle saillant Y entre les portions 18, 19 du premier tronçon 11 est compris entre 90° et 175°. De préférence, l'angle Y est égal à 170°.

La tête d'appui 4 peut en outre comporter une zone d'appui 30 destinée à être en contact avec la première surface 6 du support 2, et une zone de dégagement 31 située à distance de la première surface 6 du support 2, c'est-à-dire que la zone de dégagement 31 n'est pas en contact avec la première surface 6. La zone d'appui 30 peut correspondre à une première partie plane d'une surface d'appui de la tête d'appui 4. La surface d'appui est située en regard de la première surface 6 du support 2. La première partie plane 30 s'étend de préférence perpendiculairement à l'axe longitudinal X du fût 5, de manière à fournir un appui efficace lorsque la première surface 6 est également plane. Par exemple, la zone de dégagement 31 peut être une deuxième partie plane de la surface d'appui, inclinée par rapport à la première partie plane 30 de sorte que la surface d'appui ne soit pas en contact avec la première surface 6. La deuxième partie plane 31 est adjacente au tronçon proximal 7, elle est située entre la première partie plane 30 et le tronçon proximal 7. Ainsi, lorsque la pièce est introduite dans le logement 3, la zone d'appui 30 vient au contact de la première surface 6 du support, et la zone de dégagement 31 empêche un contact entre la surface d'appui et la première surface 6. Plus particulièrement la zone de dégagement n'est pas en contact avec une deuxième arête 23 du logement 3 située entre la première surface 6 et la surface interne 8 du logement 3. La zone de dégagement 31 limite ainsi les contraintes radiales pouvant être exercées au niveau de la deuxième arête 23 du logement 3. En outre, lorsque la surface externe du tronçon proximal 7 n'est pas en contact avec la surface interne 8 du logement 3, comme illustré sur les figures 1, 2 et 4, la zone de dégagement 31 empêche un contact entre la tête d'appui 4 et la deuxième arête 23 du logement 3, ce qui empêche toute contrainte radiale ou axiale sur la deuxième arête 23. Sur la figure 2, on peut noter que la pièce 1 est située à distance des première et deuxième arêtes 21, 22 du support 2, et à distance de la surface interne 8 du logement 3. Ce qui limite efficacement la génération d'éventuelles contraintes sur le support 2, en particulier des contraintes radiales.

Sur la figure 2, on a également représenté un dispositif comprenant un support 2 muni d'un logement 3 dans lequel est introduite la pièce 1 définie ci-dessus. La pièce 1 est représentée sur la figure 2 lorsqu'elle est sertie sur le support 2.

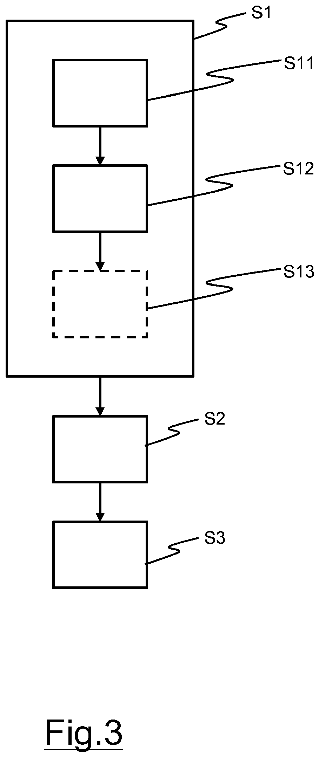

Sur la figure 3, on a représenté les principales étapes d'un procédé de fabrication du dispositif illustré à la figure 2, et d'un procédé de fabrication S1 de la pièce à sertir 1. Le procédé de fabrication du dispositif comprend les étapes S11 à S13 du procédé de fabrication S1 de la pièce à sertir 1, dont la dernière étape S13, représentée en pointillés sur la figure 3, est optionnelle, et une étape d'introduction S2 de la pièce à sertir 1 dans le logement 3 du support 2. Le procédé de fabrication du dispositif peut comprendre une étape de sertissage S3 de la pièce 1 sur le support 2.

Le procédé de fabrication S1 de la pièce à sertir 1 comprend une étape de formation du tronçon de sertissage 9 au niveau du fût 5 de la pièce. L'étape de formation du tronçon de sertissage 9 comporte une formation du premier tronçon S11 et une formation du deuxième tronçon S12. Les étapes de formation des premier et deuxième tronçons S11, S12 peuvent être réalisées simultanément. Plus particulièrement, l'étape de formation du premier tronçon 11 comporte une formation d'un coude 17 faisant saillie à l'intérieur du creux 13 du fût 5 et subdivisant le premier tronçon 11 en une première portion 18 tronconique adjacente à la tête d'appui 4 et s'évasant en direction de la tête d'appui 4, et en une deuxième portion 19 tronconique adjacente au deuxième tronçon 12 et s'évasant dans la direction opposée à la tête d'appui 4. Par exemple, l'étape de formation du coude 17 du premier tronçon peut être effectuée à partir d'une étape de frappe du fût 5. Selon un autre exemple, l'étape de formation du coude 17 du premier tronçon 11 peut être effectuée à partir d'une étape de matriçage du fût 5 dans laquelle on serre des mâchoires contre le fût pour le déformer à l'intérieur du creux du fût. En variante, l'étape de formation du coude 17 du premier tronçon 11 peut être effectuée à partir d'une étape de roulage dans laquelle on anime en rotation le fût autour de l'axe longitudinal X et on serre des mâchoires contre le fût 5.

Le procédé de fabrication S1 de la pièce à sertir 1, peut en outre comprendre une étape de traitement thermique S13 de la pièce à une température supérieure à 100°C. Plus particulièrement l'étape de traitement thermique est effectuée sur le tronçon de sertissage 9. Par exemple, le traitement thermique est réalisé en mettant la pièce 1 entière, ou uniquement le tronçon de sertissage 9, dans un four. L'étape de traitement thermique S13 permet de rendre le tronçon de sertissage plus ductile. Le traitement thermique S13 permet de faciliter la déformation du tronçon de sertissage lors de l'opération de sertissage. Lorsque la pièce est en aluminium, le traitement thermique est réalisé avec une température comprise entre 320°C et 400°C. Lorsque la pièce est en acier inoxydable, le traitement thermique est réalisé avec une température comprise entre 1050°C et 1100°C. Lorsque la pièce est en acier, le traitement thermique est réalisé avec une température comprise entre 720°C et 1100°C. De façon générale, lorsqu'on fabrique une pièce à sertir en acier inoxydable ou non, ou en aluminium, on effectue une étape de traitement thermique, au moins dans le tronçon de sertissage de la pièce, pour la rendre plus ductile afin d'effectuer une opération de sertissage maîtrisée.

Selon un mode de mise en oeuvre avantageux, l'étape de formation du deuxième tronçon 12 comporte une formation d'un coude 20 faisant saillie à l'extérieur du fût 5. Ce mode avantageux est particulièrement adapté lorsque la pièce à sertir 1 est en métal, et plus particulièrement lorsque la pièce est en acier inoxydable ou non, ou en aluminium. Selon le mode de mise en oeuvre avantageux, le procédé de fabrication S1 de la pièce à sertir est dépourvu de l'étape de traitement thermique S13 de la pièce à une température supérieure à 100°C. En effet, de façon inattendue, la pièce à sertir 1 munie d'un coude intérieur 17 et d'un coude extérieur 20, lorsqu'elle est en métal, ne nécessite pas un traitement thermique. En effet, le coude externe 20 améliore l'amorce du sertissage et coopère avec le coude interne 17 pour rendre le tronçon de sertissage 9 suffisamment déformable pour effectuer l'opération de sertissage de façon maîtrisée. En variante, on peut toujours effectuer l'étape de traitement thermique S13 sur la pièce métallique munie d'un coude intérieur 17 et d'un coude extérieur 20, ou encore localement au niveau du tronçon de sertissage de la pièce.

La pièce à sertir ne génère pas, ou peu, de contraintes radiales sur le support sur lequel elle est sertie. La pièce et son procédé de fabrication qui viennent d'être décrits sont donc particulièrement adaptés aux supports en matériau composite qui sont plus fragiles que la plupart des métaux et qui peuvent se fissurer ou se délaminer lors de contraintes radiales élevées. Une telle pièce et un tel procédé sont particulièrement adaptés pour l'industrie automobile, navale ou aéronautique...

## Revendications

1. Pièce à sertir sur un support, comprenant une tête d'appui (4) et un fût (5) comportant un tronçon de sertissage (9) destiné à être déformé lors d'une opération de sertissage de la pièce, le tronçon de sertissage (9) comprenant un premier tronçon (11) creux adjacent à la tête d'appui (4) et un deuxième tronçon (12) adjacent au premier tronçon (11), le deuxième tronçon (12) étant configuré pour se déformer à l'extérieur de la pièce en un bourrelet de sertissage pour sertir la pièce sur le support, le premier tronçon (11) comportant un coude (17) faisant saillie à l'intérieur du creux (13) du fût (5) et subdivisant le premier tronçon (11) en une première portion (18) tronconique adjacente à la tête d'appui (4) et s'évasant en direction de la tête d'appui (4) et en une deuxième portion (19) tronconique adjacente au deuxième tronçon (12) et s'évasant dans la direction opposée à la tête d'appui (4), le premier tronçon (11) étant configuré pour se déformer à l'intérieur du creux (13) du fût (5) en un bourrelet de dégagement pour limiter les efforts sur le support lors de l'opération de sertissage de la pièce, le deuxième tronçon (12) ayant une forme tronconique s'évasant dans la direction opposée à la tête d'appui (4).

2. Pièce selon la revendication 1, dans laquelle la deuxième portion (19) tronconique et le deuxième tronçon (12) ont la même épaisseur et forment un segment de sertissage, la longueur de la génératrice externe du segment de sertissage étant supérieure ou égale à celle de la génératrice externe de la première portion (18).

3. Pièce à sertir sur un support, comprenant une tête d'appui (4) et un fût (5) comportant un tronçon de sertissage (9) destiné à être déformé lors d'une opération de sertissage de la pièce, le tronçon de sertissage (9) comprenant un premier tronçon (11) creux adjacent à la tête d'appui (4) et un deuxième tronçon (12) adjacent au premier tronçon (11), le deuxième tronçon (12) étant configuré pour se déformer à l'extérieur de la pièce en un bourrelet de sertissage pour sertir la pièce sur le support, le premier tronçon (11) comportant un coude (17) faisant saillie à l'intérieur du creux (13) du fût (5) et subdivisant le premier tronçon (11) en une première portion (18) tronconique adjacente à la tête d'appui (4) et s'évasant en direction de la tête d'appui (4) et en une deuxième portion (19) tronconique adjacente au deuxième tronçon (12) et s'évasant dans la direction opposée à la tête d'appui (4), le premier tronçon (11) étant configuré pour se déformer à l'intérieur du creux (13) du fût (5) en un bourrelet de dégagement pour limiter les efforts sur le support lors de l'opération de sertissage de la pièce, le deuxième tronçon (12) comportant un coude (20) faisant saillie à l'extérieur du fût.

4. Pièce selon l'une des revendications 1 à 3, dans laquelle le deuxième tronçon (12) est creux et l'épaisseur de la paroi du deuxième tronçon (12) est identique à celle du premier tronçon (11).

5. Pièce selon l'une des revendications 1 à 4, dans laquelle le fût (5) comporte un tronçon distal (10) adjacent au deuxième tronçon (12), et l'épaisseur de la paroi du tronçon distal (10) est supérieure ou égale à celle du deuxième tronçon (12).

6. Pièce selon l'une des revendications 1 à 5, dans laquelle l'angle saillant (Y) entre les portions du premier tronçon (11) est compris entre 90° et 175°.

7. Pièce selon l'une des revendications 1 à 6, dans laquelle la tête d'appui (4) comporte un zone d'appui (30) destinée à être en contact avec une surface (6) du support (2), et une zone de dégagement (31) située à distance de la surface (6) du support (2).

8. Dispositif comprenant un support (2) muni d'un logement (3) dans lequel est introduite une pièce (1) selon l'une des revendications 1 à 7.

9. Procédé de fabrication d'une pièce à sertir sur un support, la pièce comprenant une tête d'appui (4) et un fût (5), comportant une étape de formation, au niveau du fût (5), d'un tronçon de sertissage (9) destiné à être déformé lors d'une opération de sertissage de la pièce, l'étape de formation du tronçon de sertissage (9) comportant :
- une formation d'un premier tronçon (11) creux adjacent à la tête d'appui (4), le premier tronçon (11) comportant un coude (17) faisant saillie à l'intérieur du creux (13) du fût (5) et subdivisant le premier tronçon (11) en une première portion (18) tronconique adjacente à la tête d'appui (4) et s'évasant en direction de la tête d'appui (4) et en une deuxième portion (19) tronconique adjacente au deuxième tronçon (12) et s'évasant dans la direction opposée à la tête d'appui (4), le premier tronçon (11) étant configuré pour se déformer à l'intérieur du creux (13) du fût (5) en un bourrelet de dégagement pour limiter les efforts sur le support lors de l'opération de sertissage de la pièce, **caractérisé en ce que** l'étape de formation du tronçon de sertissage (9) comporte :
- une formation d'un deuxième tronçon (12) adjacent au premier tronçon (11), ayant une forme tronconique s'évasant dans la direction opposée à la tête d'appui (4), et configuré pour se déformer à l'extérieur de la pièce en un bourrelet de sertissage pour sertir la pièce sur le support.

10. Procédé de fabrication d'une pièce à sertir sur un support, la pièce comprenant une tête d'appui (4) et un fût (5), comportant une étape de formation, au niveau du fût (5), d'un tronçon de sertissage (9) destiné à être déformé lors d'une opération de sertissage de la pièce, l'étape de formation du tronçon de sertissage (9) comportant :
- une formation d'un premier tronçon (11) creux adjacent à la tête d'appui (4), le premier tronçon (11) comportant un coude (17) faisant saillie à l'intérieur du creux (13) du fût (5) et subdivisant le premier tronçon (11) en une première portion (18) tronconique adjacente à la tête d'appui (4) et s'évasant en direction de la tête d'appui (4) et en une deuxième portion (19) tronconique adjacente au deuxième tronçon (12) et s'évasant dans la direction opposée à la tête d'appui (4), le premier tronçon (11) étant configuré pour se déformer à l'intérieur du creux (13) du fût (5) en un bourrelet de dégagement pour limiter les efforts sur le support lors de l'opération de sertissage de la pièce, **caractérisé en ce que** l'étape de formation du tronçon de sertissage (9) comporte :
- une formation d'un deuxième tronçon (12) adjacent au premier tronçon (11), ayant un coude (20) faisant saillie à l'extérieur du fût (5), et configuré pour se déformer à l'extérieur de la pièce en un bourrelet de sertissage pour sertir la pièce sur le support.

11. Procédé selon la revendication 10, dans lequel la pièce à sertir est en métal et le procédé de fabrication de la pièce à sertir est dépourvu d'une étape de traitement thermique de la pièce à une température supérieure à 100°C.

12. Procédé selon l'une des revendications 9 à 11, dans lequel le deuxième tronçon (12) est creux et l'épaisseur de la paroi du deuxième tronçon (12) est identique à celle du premier tronçon (11).

13. Procédé de fabrication d'un dispositif muni d'un support (2) ayant un logement (3), comprenant les étapes suivantes :
- fabriquer une pièce à sertir selon l'une des revendications 9 à 12,
- introduire la pièce dans le logement (3), et
- sertir la pièce sur le support (2).

## Patentansprüche

1. Auf eine Halterung zu bördelndes Werkstück, umfassend einen Auflagekopf (4) und einen Schaft (5), der einen Bördelabschnitt (9) aufweist, der bei einem Bördelvorgang des Werkstücks verformt werden soll, wobei der Bördelabschnitt (9) einen ersten, hohlen Abschnitt (11), aufweist, der an den Auflagekopf (4) angrenzt, sowie einen zweiten Abschnitt (12), der an den ersten Abschnitt (11) angrenzt, wobei der zweite Abschnitt (12) so vorgesehen ist, dass er sich außerhalb des Werkstücks in eine Bördelwulst verformt, um das Werkstück auf den Träger zu bördeln, und wobei der erste Abschnitt (11) eine Krümmung (17) aufweist, die in das Innere des Hohlraums (13) des Schafts (5) hineinragt und den ersten Abschnitt (11) in einen ersten kegelstumpfförmigen Bereich (18), der an den Auflagekopf (4) angrenzt und sich in Richtung des Auflagekopfs (4) erweitert, sowie einen zweiten kegelstumpfförmigen Bereich (19) teilt, der an den zweiten Abschnitt (12) angrenzt und sich in zum Auflagekopf (4) entgegengesetzter Richtung erweitert, wobei der erste Abschnitt (11) so vorgesehen ist, dass er sich innerhalb des Hohlraums (13) des Schafts (5) zu einer Entlastungswulst verformt, um die Kräfte auf den Träger beim Bördelvorgang des Werkstücks zu begrenzen, und der zweite Abschnitt (12) kegelstumpfförmig ist und sich in entgegengesetzter Richtung zum Auflagekopf (4) erweitert.

2. Werkstück nach Anspruch 1, bei dem der zweite kegelstumpfförmige Bereich (19) und der zweite Abschnitt (12) die gleiche Dicke haben und ein Bördelsegment bilden, wobei die Länge der äußeren Erzeugenden des Bördelsegments größer oder gleich ist wie/als die äußere Erzeugende des ersten Abschnitts (18).

3. Werkstück zum Bördeln auf einen Träger, das einen Auflagekopf (4) und einen Schaft (5) umfasst, der einen Bördelabschnitt (9) aufweist, der bei einem Bördelvorgang des Werkstücks verformt werden soll, wobei der Bördelabschnitt (9) einen ersten, hohlen Abschnitt (11), aufweist, der an den Auflagekopf (4) angrenzt, sowie einen zweiten Abschnitt (12), der an den ersten Abschnitt (11) angrenzt, wobei der zweite Abschnitt (12) so vorgesehen ist, dass er sich außerhalb des Werkstücks in eine Bördelwulst verformt, um das Werkstück auf den Träger zu bördeln, und wobei der erste Abschnitt (11) eine Krümmung (17) aufweist, die in das Innere des Hohlraums (13) des Schafts (5) hineinragt und den ersten Abschnitt (11) in einen ersten kegelstumpfförmigen Bereich (18), der an den Auflagekopf (4) angrenzt und sich in Richtung des Auflagekopfs (4) erweitert, sowie einen zweiten kegelstumpfförmigen Bereich (19) teilt, der an den zweiten Abschnitt (12) angrenzt und sich in zum Auflagekopf (4) entgegengesetzter Richtung erweitert, wobei der erste Abschnitt (11) so vorgesehen ist, dass er sich innerhalb des Hohlraums (13) des Schafts (5) zu einer Entlastungswulst verformt, um die Kräfte auf den Träger beim Bördelvorgang des Werkstücks zu begrenzen, und der zweite Abschnitt (12) eine Krümmung (20) aufweist, die aus dem Schaft heraussteht.

4. Werkstück nach einem der Ansprüche 1 bis 3, bei dem der zweite Abschnitt (12) hohl ist und die Dicke der Wand des zweiten Abschnitts (12) gleich derjenigen des ersten Abschnitts (11) ist.

5. Werkstück nach einem der Ansprüche 1 bis 4, bei dem der Schaft (5) einen distalen Abschnitt (10) angrenzend an den zweiten Abschnitt (12) aufweist und die Dicke der Wand des distalen Abschnitts (10) größer als diejenige oder gleich derjenigen des zweiten Abschnitts (12) ist.

6. Werkstück nach einem der Ansprüche 1 bis 5, bei dem der vorspringende Winkel (Y) zwischen den Bereichen des ersten Abschnitts (11) 90 bis 175 beträgt.

7. Werkstück nach einem der Ansprüche 1 bis 6, bei dem der Auflagekopf (4) einen Auflagebereich (30) umfasst, der dazu bestimmt ist, mit einer Oberfläche (6) des Trägers (2) in Kontakt zu sein, und einen Abstandsbereich (31), der sich beabstandet von der Oberfläche (6) des Trägers (2) befindet.

8. Vorrichtung, die einen Träger (2) umfasst, der mit einer Aufnahme (3) versehen ist, in die ein Werkstück (1) nach einem der Ansprüche 1 bis 7 eingesetzt ist.

9. Herstellungsverfahren für ein auf einen Träger zu bördelndes Werkstück, wobei das Werkstück einen Auflagekopf (4) und einen Schaft (5) umfasst, das einen Schritt der Herstellung eines Bördelabschnitts (9) in Höhe des Schafts (5) umfasst, welcher Bördelabschnitt (9) dazu bestimmt ist, bei einem Bördelvorgang des Werkstücks verformt zu werden, welcher Schritt zur Herstellung des Bördelabschnitts (9) umfasst:
- Herstellung eines ersten, hohlen Abschnitts (11), der an den Auflagekopf (4) angrenzt, wobei der erste Abschnitt (11) eine Krümmung (17) aufweist, die in das Innere des Hohlraums (13) des Schafts (5) hineinragt und den ersten Abschnitt (11) in einen ersten kegelstumpfförmigen Bereich (18), der an den Auflagebereich (4) angrenzt und in Richtung des Auflagebereichs (4) erweitert ist, sowie einen zweiten kegelstumpfförmigen Bereich (19) teilt, der an den zweiten Abschnitt (12) angrenzt und in zum Auflagekopf (4) entgegengesetzter Richtung erweitert ist, wobei der erste Abschnitt (11) so vorgesehen ist, dass er sich innerhalb des Hohlraums (13) des Schafts (5) zu einer Abstandswulst verformt, um die Kräfte auf den Träger beim Bördelvorgang des Werkstücks zu begrenzen, **dadurch gekennzeichnet, dass** der Schritt der Herstellung des Bördelabschnitts (9) umfasst:
- Herstellung eines zweiten, an den ersten Abschnitt (11) angrenzenden Abschnitts (12), der eine kegelstumpfartige Form hat, die in zum Auflagekopf (4) entgegengesetzter Richtung weiter wird und so vorgesehen ist, dass sie sich außerhalb des Werkstücks in eine Bördelwulst verformt, um das Werkstück auf den Träger zu bördeln.

10. Verfahren zur Herstellung eines auf einen Träger zu bördelnden Werkstücks, das einen oberen Auflagebereich (4) und einen Schaft (5) und einen Schritt der Herstellung eines Bördelabschnitts (9) in Höhe des Schafts (5) umfasst, welcher Bördelabschnitt (9) dazu bestimmt ist, bei einem Bördelvorgang des Werkstücks verformt zu werden, welcher Schritt zur Herstellung des Bördelabschnitts (9) umfasst:
- Herstellung eines ersten, hohlen Abschnitts (11), der an den Auflagekopf (4) angrenzt, wobei der erste Abschnitt (11) eine Krümmung (17) aufweist, die in das Innere des Hohlraums (13) des Schafts (5) hineinragt und den ersten Abschnitt (11) in einen ersten kegelstumpfförmigen Bereich (18), der an den Auflagebereich (4) angrenzt und in Richtung des Auflagebereichs (4) erweitert ist, sowie einen zweiten kegelstumpfförmigen Bereich (19) teilt, der an den zweiten Abschnitt (12) angrenzt und in zum Auflagekopf (4) entgegengesetzter Richtung erweitert ist, wobei der erste Abschnitt (11) so vorgesehen ist, dass er sich innerhalb des Hohlraums (13) des Schafts (5) zu einer Abstandswulst verformt, um die Kräfte auf den Träger beim Bördelvorgang des Werkstücks zu begrenzen, **dadurch gekennzeichnet, dass** der Schritt der Herstellung des Bördelabschnitts (9) umfasst:
- Herstellung eines zweiten, an den ersten Abschnitt (11) angrenzenden Abschnitts (12), der eine Krümmung (20) hat, die aus dem Schaft (5) heraussteht und so vorgesehen ist, dass sie sich außerhalb des Werkstücks in einen Bördelrand verformt, um das Werkstück auf die Halterung zu bördeln.

11. Verfahren nach Anspruch 10, bei dem das zu bördelnde Werkstück aus Metall ist und das Herstellungsverfahren für das zu bördelnde Werkstück keinen Schritt der thermischen Behandlung des Teils bei einer Temperatur über 100°C aufweist.

12. Verfahren nach einem der Ansprüche 9 bis 11, bei dem der zweite Abschnitt (12) hohl ist und die Dicke der Wand des zweiten Abschnitts (12) gleich derjenigen des ersten Abschnitts (11) ist.

13. Verfahren zur Herstellung einer Vorrichtung, die mit einem Träger (2) mit einer Aufnahme (3) versehen ist, das folgende Schritte umfasst:
- Herstellung eines zu bördelnden Werkstücks nach einem der Ansprüche 9 bis 12,
- Einsetzen des Werkstücks in die Aufnahme (3), und
- Bördeln des Werkstücks auf den Träger (2).

## Claims

1. Part to be crimped on a support, comprising a support head (4) and a shaft (5) comprising a crimping section (9) designed to be deformed when a crimping operation of the part is performed, the crimping section (9) comprising a first hollow section (11) adjacent to the support head (4) and a second section (12) adjacent to the first section (11), the second section (12) being configured to be deformed outside the part into a crimp bead to crimp the part onto the support, the first section (11) comprising a bend (17) salient towards the inside of the hollow (13) of the shaft (5) and subdividing the first section (11) into a first truncated cone portion (18) adjacent to the support head (4) and widened in the direction of the support head (4) and a second truncated cone portion (19) adjacent to the second section (12) and widened in the opposite direction to the support head (4), the first section (11) being configured to be deformed inside the hollow (13) of the shaft (5) into a clearing bead to limit the forces exerted on the support when the crimping operation of the part is performed, the second section (12) having a truncated cone shape widened in the opposite direction to the support head (4).

2. Part according to claim 1, wherein the second truncated cone portion (19) and the second section (12) have the same thickness and form a crimping segment, the length of the external generatrix of the crimping segment being greater than or equal to that of the external generatrix of the first portion (18).

3. Part to be crimped on a support, comprising a support head (4) and a shaft (5) comprising a crimping section (9) designed to be deformed when a crimping operation of the part is performed, the crimping section (9) comprising a first hollow section (11) adjacent to the support head (4) and a second section (12) adjacent to the first section (11), the second section (12) being configured to be deformed outside the part into a crimp bead to crimp the part onto the support, the first section (11) comprising a bend (17) salient towards the inside of the hollow (13) of the shaft (5) and subdividing the first section (11) into a first truncated cone portion (18) adjacent to the support head (4) and widened in the direction of the support head (4) and a second truncated cone portion (19) adjacent to the second section (12) and widened in the opposite direction to the support head (4), the first section (11) being configured to be deformed inside the hollow (13) of the shaft (5) into a clearing bead to limit the forces exerted on the support when the crimping operation of the part is performed, the second section (12) comprising a bend (20) salient towards the outside of the shaft.

4. Part according to one of claims 1 to 3, wherein the second section (12) is hollow and the thickness of the wall of the second section (12) is identical to that of the first section (11).

5. Part according to one of claims 1 to 4, wherein the shaft (5) comprises a distal section (10) adjacent to the second section (12), and the thickness of the wall of the distal section (10) is greater than or equal to that of the second section (12).

6. Part according to one of claims 1 to 5, wherein the salient angle (Y) between the portions of the first section (11) is comprised between 90° and 175°.

7. Part according to one of claims 1 to 6, wherein the support head (4) comprises a support area (30) designed to be in contact with a surface (6) of the support (2), and a clearing area (31) situated at a distance from the surface (6) of the support (2).

8. Device comprising a support (2) provided with a housing (3) in which a part (1) according to one of claims 1 to 7 is inserted.

9. Method for manufacturing a part to be crimped onto a support, the part comprising a support head (4) and a shaft (5), comprising a step of formation of a crimping section (9), on the shaft (5), designed to be deformed when a crimping operation of the part is performed, the formation step of the crimping section (9) comprising:
- forming a first hollow section (11) adjacent to the support head (4), the first section (11) comprising a bend (17) salient towards the inside of the hollow (13) of the shaft (5) and subdividing the first section (11) into a first truncated cone portion (18) adjacent to the support head (4) and widened in the direction of the support head (4) and a second truncated cone portion (19) adjacent to the second section (12) and widened in the opposite direction to the support head (4), the first section (11) being configured to be deformed towards the inside of the hollow (13) of the shaft (5) into a clearing bead to limit the forces exerted on the support when the crimping operation of the part is performed, **characterized in that** the formation step of the crimping section (9) comprises:
- forming a second section (12) adjacent to the first section (11), having a truncated cone shape widened in the opposite direction to the support head (4), and configured to be deformed towards the outside of the part into a crimp bead to crimp the part onto the support.

10. Method for manufacturing a part to be crimped onto a support, the part comprising a support head (4) and a shaft (5), comprising a step of formation of a crimping section (9), on the shaft (5), designed to be deformed when a crimping operation of the part is performed, the formation step of the crimping section (9) comprising:
- forming a first hollow section (11) adjacent to the support head (4), the first section (11) comprising a bend (17) salient towards the inside of the hollow (13) of the shaft (5) and subdividing the first section (11) into a first truncated cone portion (18) adjacent to the support head (4) and widened in the direction of the support head (4) and a second truncated cone portion (19) adjacent to the second section (12) and widened in the opposite direction to the support head (4), the first section (11) being configured to be deformed towards the inside of the hollow (13) of the shaft (5) into a clearing bead to limit the forces exerted on the support when the crimping operation of the part is performed, **characterized in that** the formation step of the crimping section (9) comprises:
- forming a second section (12) adjacent to the first section (11), having a bend (20) salient towards the outside of the shaft (5), and configured to be deformed towards the outside of the part into a crimp bead to crimp the part onto the support.

11. Method according to claim 10, wherein the part to be crimped is made from metal and the method of manufacturing the part to be crimped does not comprise a heat treatment step of the part at a temperature of more than 100°C.

12. Method according to one of claims 9 to 11, wherein the second section (12) is hollow and the thickness of the wall of the second section (12) is identical to that of the first section (11).

13. Method for manufacturing a device provided with a support (2) having a housing (3), comprising the following steps:
- manufacturing a part to be crimped according to one of claims 9 to 12,
- inserting the part in the housing (3), and
- crimping the part onto the support (2).
